# EUROPÄISCHE PATENTSCHRIFT

(11) **EP 2 162 269 B1**
(45) Veröffentlichungstag und Bekanntmachung des Hinweises auf die Patenterteilung: **15.08.2012**
(21) Anmeldenummer: 08774315.9
(22) Anmeldetag: 26.06.2008
(51) Int. Cl.: B29C 44/34, C08J 9/00, C08J 9/16, C08J 9/232

(54) **Expandierbare Polymergranulate aus Acrylnitrilcopolymeren**
Expandable granulates from acrylonitrile copolymers
Granules expansibles à base de copolymères d'acrylonitrile

(30) Priorität: 28.06.2007 EP 07111306
(43) Veröffentlichungstag der Anmeldung: 17.03.2010
(73) Patentinhaber: BASF SE, 67056 Ludwigshafen (DE)
(72) Erfinder: SCHIPS, Carsten, 67342 Speyer (DE); HAHN, Klaus, 67281 Kirchheim (DE); BELLIN, Ingo, 68159 Mannheim (DE); LONGO, Daniela, 53721 Siegburg (DE); ASSMANN, Jens, 68165 Mannheim (DE); GIETL, Andreas, 68165 Mannheim (DE); GASSAN, Jochen, 76829 Landau (DE)
(86) Internationale Anmeldenummer: PCT/EP2008/058128
(87) Internationale Veröffentlichungsnummer: WO 2009/000872

(56) Entgegenhaltungen:
- EP-A- 0 128 335
- WO-A-00/43442
- DE-A1- 3 711 028
- GB-A- 994 074
- US-A- 3 288 731
- US-A- 3 639 302
- DATABASE WPI Week 200166 Thomson Scientific, London, GB; AN 2001-586351 XP002491535 -& JP 2001 181433 A (KANEKA CORP) 3. Juli 2001 (2001-07-03)
- DATABASE WPI Week 198521 Thomson Scientific, London, GB; AN 1985-125323 XP002491536 -& JP 60 063235 A (KANEGAFUCHI CHEM KK) 11. April 1985 (1985-04-11)

## Beschreibung

Die Erfindung betrifft expandierbare, acrylnitrilcopolymerhaltige Polymergranulate sowie ein Verfahren zur Herstellung der expandierbaren, acrylnitrilcopolymerhaltigen Polymergranulate.

Verfahren zur Herstellung von expandierbaren Styrolpolymeren, wie expandierbarem Polystyrol (EPS), durch Suspensionspolymerisation sind seit langem bekannt. Diese Verfahren haben den Nachteil, dass große Mengen Abwasser anfallen und entsorgt werden müssen. Die Polymerisate müssen getrocknet werden, um Innenwasser zu entfernen. Außerdem führt die Suspensionspolymerisation in der Regel zu breiten Perlgrößenverteilungen, die aufwändig in verschiedene Perlfraktionen gesiebt werden müssen.

Weiterhin können expandierte und expandierbare Styrolpolymerisate mittels Extrusionsverfahren hergestellt werden. Hierbei wird das Treibmittel z.B. über einen Extruder In die Polymerschmelze eingemischt, durch eine Düsenplatte gefördert und zu Partikeln oder Strängen granuliert (US 3,817,669, GB 1,062,307, EP-A 0 126 459, US 5,000,891).

Die EP-A 0 668 139 beschreibt ein Verfahren zur wirtschaftlichen Herstellung von expandierbarem Polystyrolgranulat (EPS), wobei die treibmittelhaltige Schmelze mittels statischer Mischelemente in einer Dispergier-, Halte- und Abkühlstufe hergestellt und anschließend granuliert wird. Aufgrund der Abkühlung der Schmelze auf wenige Grad über der Erstarrungstemperatur ist die Abführung hoher Wärmemengen notwendig.

Um das Aufschäumen nach der Extrusion weitgehend zu verhindern, wurden verschiedene Verfahren für die Granulierung, wie Unterwassergranulierung (EP-A 305 862), Sprühnebel (WO 03/053651) oder Zerstäubung (US 6,093,750) vorgeschlagen.

Die WO 98/51735 beschreibt Graphitpartikel enthaltende expandierbare Styrolpolymere mit verringerter Wärmeleitfähigkeit, die durch Suspensionspolymerisation oder durch Extrusion in einem Zweischneckenextruder erhältlich sind. Aufgrund der hohen Scherkräfte in einem Zweischneckenextruder beobachtet man in der Regel einen signifikanten Molekulargewichtsabbau des eingesetzten Polymers und/oder teilweise Zersetzung von zugegebenen Additiven, wie Flammschutzmitteln.

Zur Erzielung optimaler Dämmeigenschaften und guter Oberflächen der Schaumstoffkörper ist die Zellzahl und Schaumstruktur, die sich beim Verschäumen der expandierbaren Styrolpolymere (EPS) einstellt, von entscheidender Bedeutung. Die durch Extrusion hergestellten EPS-Granulate lassen sich häufig nicht zu Schaumstoffen mit optimaler Schaumstruktur verschäumen.

Expandierbare, kautschukmodifizierte Styrolpolymerisate für elastische Polystyrolschäume sind beispielsweise beschrieben in WO 94/25516, EP-A 682 077, DE-A 97 10 442 und EP-A 0 872 513.

In der WO 2005/06652 sind Partikelschaumformteile mit einer Dichte von 10 bis 100 g/l, die durch Verschweißen von vorgeschäumten Schaumpartikeln aus expandierbaren, thermoplastischen Polymergranulaten, enthaltend 5 bis 100 Gew.-% eines Styrolcopolymers A), 0 bis 95 Gew.-% Polystyrol B) und 0 bis 95 Gew.-% eines von a) und b) verschiedenen thermoplastischen Polymers C), erhältlich sind, sowie Verfahren zur Herstellung der expandierbaren thermoplastischen Polymergranulate beschrieben.
Als Styrolcopolymer A) sind beispielsweise Styrol-Acrylnitril-Copolymere (SAN) beschrieben.

DE-A-3711028 betrifft ein Verfahren zur Herstellung geschäumter Kunststoffformkörper aus vorgeschäumten Kunststoffteilchen aus thermoplastischen Kunststoffen wie z.B. α-Methylstyrol/Styrol/Acrylnitril-Terpolymer oder Polystyrol und/oder deren Mischungen.
Die vorgeschäumten Kunststoffpartikel können erzeugt werden, indem ein Kunstharz unter Zusatz eines Treibmittels durch einen Extruder extrudiert wird, dann das Extrudat druckentlastet wird, nachdem es aus der Düse des Extruders heraustritt, und anschließend in kleine vorgeschäumte Kunststoffteilchen geschnitten wird.

GB-A-994,074 betrifft ein Verfahren zur Herstellung von expandierbaren Polymeren, wobei ein geschmolzenes thermoplastisches Harz in Gegenwart eines organischen Treibmittels unter geeigneten Druckbedingungen aufgeschäumt wird und diese Mischung direkt in ein Kühlbad extrudiert wird bevor eine Expansion der Mischung eintritt. Das treibmittelhaltige Polymerharz kann granuliert werden und die so erhaltenen expandierbaren Teilchen können zu einem Partikelschaumformteil weiterverarbeitet werden. Als geeignete Polymere werden Polystyrol sowie Copolymere aus Styrol und anderen Comonomeren wie z. B. α-Methylstyrol und Acrylnitril genannt.

US-A-3288731 betrifft die Herstellung von expandierbaren Polymerteilchen, hergestellt durch Suspensionspolymerisation, vorzugsweise in Gegenwart eines Treibmittels, welche zu einem Partikelschaum und entsprechenden Formkörpern weiterverarbeitet werden können. Als geeignete Polymere werden insbesondere Styrol-Acrylnitril-α-Methylstyrol-Terpolymere genannt.

Obwohl mit den bekannten Schäumen in vielen Bereichen bereits gute Ergebnisse erzielt werden, besteht doch die ständige Aufgabe, solche Materialien beispielsweise im Hinblick auf Lösemittelbeständigkeit, Temperaturbeständigkeit, mechanische Steifheit und Treibmittelhaltevermögen zu verbessern. Dabei ist es gewünscht, dass Neuentwicklungen auf den vorhandenen Maschinen zur EPS-Herstellung verarbeitet werden können.

Es wurde nun gefunden, dass Partikelschäume und daraus hergestellte Formkörper mit besonders günstigen Eigenschaften erhalten werden, wenn die zugrunde liegenden gemäß Anspruch 1 erhältlichen expandierbaren, thermoplastischen Polymergranulate eine α-Methylstyrol/Acrylnitril-Polymerkomponente (AMSAN) enthalten.
Gegenstand der Erfindung sind daher expandierbare, thermoplastische Polymergranulate, enthaltend

5 bis 100 Gew.-% einer Komponente (A) enthaltend
a1) 5 bis 100 Gew.-% (bezogen auf (A)) eines α-Methylstyrol/Acrylnitril-Copolymers oder α-Methylstyrol/Styrol/Acrylnitril-Terpolymers und
a2) 0 bis 95 Gew.-% (bezogen auf (A)) eines Styrol/Acrylnitril-Copolymers;
0 bis 95 Gew.-% Polystyrol (B) und
0 bis 95 Gew.-% eines von (A) und B) verschiedenen thermoplastischen Polymers (C), erhältlich durch das erfindungsgemäße Verfahren.

Partikelschaumformteile, erhältlich durch Verschweißen von vorgeschäumten Schaumpartikeln aus expandierbaren, thermoplastischen Polymergranulaten gemäß Anspruch 1 weisen eine hohe Lösemittelbeständigkeit, gute Temperaturbeständigkeit, hohe mechanische Steifigkeit, ein gutes Treibmittelhaltevermögen und eine gute Verarbeitbarkeit auf EPS-Maschinen auf.

Partikelschaumstoffe, erhältlich aus Polymergranulaten gemäß Anspruch 1 weisen im Allgemeinen eine Dichte von 5 bis 500 g/l auf, bevorzugt von 10 bis 250 g/l, besonders bevorzugt von 15 bis 150 g/l.

Die Partikelschaumformteile weisen eine hohe Geschlossenzelligkeit auf, wobei in der Regel mehr als 60%, bevorzugt mehr als 70 %, besonders bevorzugt mehr als 80 % der Zellen der einzelnen Schaumpartikel geschlossenzellig sind.

Besonders bevorzugt enthält das thermoplastische Polymergranulat
50 bis 100 Gew.-% Komponente (A) und
0 bis 50 Gew.-% thermoplastisches Polymer (C).

Bevorzugt als Komponente (A) sind Mischungen enthaltend
10 bis 100 Gew.-%, vorzugsweise 20 bis 100 Gew.-%, besonders bevorzugt 25 bis 100 Gew.-%, ganz besonders bevorzugt 50 bis 100 Gew.-% (jeweils bezogen auf (A)) der AMSAN-Polymerkomponente (a1) und
0 bis 90 Gew.-%, vorzugsweise 0 bis 80 Gew.-%, besonders bevorzugt 0 bis 75 Gew.-%, ganz besonders bevorzugt 0 bis 50 Gew.-% (jeweils bezogen auf (A)) der Komponente (a2).

Bevorzugt als AMSAN-Polymerkomponente (a1) sind α-Methylstyrol/Acrylnitril-Copolymere (a11).

Bevorzugt sind Copolymere (a11) erhältlich aus
(a111) 10 bis 50 Gew.-%, bevorzugt 17 bis 43 Gew.-%, besonders 27 bis 33 Gew.-% (bezogen auf (a11)) Acrylnitril und
(a112) 50 bis 90 Gew.-%, bevorzugt 57 bis 83 Gew.-%, besonders bevorzugt 67 bis 73 Gew.-% (bezogen auf (a11)) α-Methylstyrol.

Weiterhin bevorzugt als AMSAN-Polymerkomponente (a1) sind α-Methylstyrol/Styrol/Acrylnitril-Terpolymere (a12), erhältlich aus
(a121) 61 bis 85 Gew.-% (bezogen auf (a12)) α-Methylstyrol,
(a122) 1 bis 15 Gew.-% (bezogen auf (a12)) Styrol und
(a123) 14 bis 34 Gew.-% (bezogen auf (a12)) Acrylnitril.

Als Styrol/Acrylnitril-Copolymer (SAN) (a2) sind SAN-Typen erhältlich aus
(a21) 7 bis 45 Gew.-%, bevorzugt 17 bis 35 Gew.-%, (bezogen auf (a2)) Acrylnitril und
(a22) 55 bis 93 Gew.-%, bevorzugt 65 bis 83 Gew.-%, (bezogen auf (a2)) Styrol
bevorzugt.

Als Polystyrol (B) kann radikalisch polymerisiertes glasklares Polystyrol (GPPS), schlagzäh-modifiziertes Polystyrol (HIPS) oder anionisch polymerisiertes Polystyrol (A-PS) oder anionisch polymerisiertes Schlagzäh-Polystyrol (A-IPS) eingesetzt werden. Als thermoplastisches Polymer (C) können z. B. Acrylnitril-Butadien-Styrol (ABS), Acrylnitril-Styrol-Acrylester (ASA), Polyamid (PA), Polyolefine, wie Polypropylen (PP) oder Polyethylen (PE), Polyacrylate, wie Polymethylmethacrylat (PMMA), Polycarbonat (PC), Polyester, wie Polyethylenterephthalat (PET) oder Polybutylenterephthalat (PBT), Polyethersulfon (PES), Polyetherketonen (PEK) oder Polyethersulfiden (PES) oder Mischungen davon eingesetzt werden. Bevorzugt ist Polyamid (PA).

Die Zusammensetzung der Polymergranulate kann entsprechend den gewünschten Eigenschaften des Partikelschaumformkörpers gewählt werden. Mit den erfindungsgemäßen Polymermischungen wird die Ölbeständigkeit sowie die Lösungsmittelbeständigkeit, insbesondere gegenüber aromatischen Lösungsmitteln, und die Wärmeformbeständigkeit verbessert.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekulargewichtsvertellung des AMSAN beeinflusst werden kann. Das expandierbare AMSAN sollte daher bevorzugt eine Molekulargewichtsverteilung mit einer Uneinheitlichkeit M_{w}/Mₙ von höchstens 3,5, besonders bevorzugt im Bereich von 1,5 bis 2,8 und ganz besonders bevorzugt im Bereich von 1,8 bis 2,6 aufweisen.

Als Verträglichkeitsvermittler eignen sich z.B. Maleinsäureanhydrid-modifizierte Styrolcopolymere, epoxidgruppenhaltige Polymere oder Organosilane.

Die Partikelschaumstoffe können nach üblichen, dem Fachmann bekannten Methoden, wie Suspensionspolymerisation, hergestellt werden. Bevorzugt ist jedoch die Schmelzimprägnierung, d.h. die Beaufschlagung der Polymere mit Treibmittel im Schmelzestrom, wie sie beispielsweise in WO 03/106544 beschrieben ist.

Der Polymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Polymerschmelze enthält ein oder mehrere Treibmittel in homogener Verteilung in einem Anteil von insgesamt 2 bis 10 Gew.-%, bevorzugt 3 bis 7 Gew.-%, bezogen auf die treibmittelhaltige Polymerschmelze. Als Treibmittel eignen sich aliphatische Kohlenwasserstoffe mit 2 bis 7 Kohlenstoffatomen, oder halogenierte Kohlenwasserstoffe. Bevorzugt werden iso-Butan, n-Butan, iso-Pentan, n-Pentan eingesetzt. Co-Treibmittel sind Ethanol, Aceton und Methylformiat .

Zur Verbesserung der Verschäumbarkeit können feinverteilte Innenwassertröpfchen in die Polymermatrix eingebracht werden. Dies kann beispielsweise durch die Zugabe von Wasser in die aufgeschmolzene Polymermatrix erfolgen. Die Zugabe des Wassers kann örtlich vor, mit oder nach der Treibmitteldosierung erfolgen. Eine homogene Verteilung des Wassers kann mittels dynamischer oder statischer Mischer erreicht werden.

In der Regel sind 0 bis 2, bevorzugt 0,05 bis 1,5 Gew.-% Wasser, bezogen auf die gesamte Polymerkomponente, ausreichend.

Expandierbare Polymergranulate mit mindestens 90 % des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Polymergranulate ein Expansionsvermögen α, definiert als Schüttdichte vor dem Verschäumen/Schüttdichte nach dem Verschäumen, höchstens 125, bevorzugt 25 bis 100 aufweisen.

Die erfindungsgemäßen expandierbaren Polymergranulate weisen in der Regel eine Schüttdichte von höchstens 700 g/l, bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des Weiteren können der Polymerschmelze Additive, Kelmbildner, Füllstoffe, Weichmacher, Flammschutzmittel, lösliche und unlösliche anorganische und/oder organische Farbstoffe und Pigmente, z.B. IR-Absorber, wie Ruß, Graphit oder Aluminiumpulver, gemeinsam oder räumlich getrennt, z.B. über Mischer oder Seitenextruder zugegeben werden.

Die Partikelschäume eignen sich insbesondere für den Zusatz von mineralischen Füllstoffen, wie Glasfasern.

In der Regel werden die Farbstoffe und Pigmente In Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein, ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, niedermolekulare Styrolpolymere, Phthalate, die in Mengen von 0,05 bis 10 Gew.-%, bezogen auf das Styrolpolymerisat, eingesetzt werden können.

Zur Herstellung der erfindungsgemäßen expandierbaren Polymergranulate wird das Treibmittel in die Polymerschmelze eingemischt. Das erfindungsgemäße Verfahren umfasst die Stufen gemäß Anspruch 11. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Polymerschmelze wird in der Regel mit einer Temperatur im Bereich von 140 bis 300 °C, bevorzugt im Bereich von 160 bis 240 °C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polymerschmelze beheizt. Bevorzugt liegt die Temperatur der Düsenplatte im Bereich von 20 bis 100 °C über der Temperatur der treibmittelhaltigen Polymerschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis L/D von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis UD im Bereich von 3 - 20.

Im Allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen, kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Das erfindungsgemäße Verfahren zur Herstellung der expandierbaren Polymergranulate umfasst die Schritte
a) Polymerisation von α-Methylstyrolmonomeren, Styrol und/oder Acrylnitril zu α-Methylstyrol-Copolymeren (A) sowie gegebenenfalls Polymerisation von Styrol zu Polystyrol (B), unter Erzeugung einer Polymerschmelze,
b) Entgasung der erhaltenen Polymerschmelze,
c) gegebenenfalls Mischen mit den übrigen Polymeren der Komponenten (A), (B) und (C),
d) Einmischen eines Treibmittels in einem Anteil von insgesamt 2 bis 10 Gew.-%, bezogen auf die treibmittelhaltige Polymerschmelze, aus aliphatischen Kohlenwasserstoffen mit 2 bis 7 Kohlenstoffatomen oder halogenierten Kohlenwasserstoffen und Ethanol, Aceton oder Methylformiat als Co-Treibmittel und gegebenenfalls Additiven in die Polymerschmelze mittels statischen oder dynamischen Mischer bei einer Temperatur von mindestens 150°C, bevorzugt 180 *-* 260°C,
e) Kühlen der treibmittelhaltigen Polymerschmelze auf eine Temperatur, die mindestens 120°C bevorzugt 150- 200°C beträgt,
f) Austrag durch eine Düsenplatte mit Bohrungen, deren Durchmesser am Düsenaustritt höchstens 1,5 mm beträgt und
g) Granulieren der treibmittelhaltigen Schmelze.

In Schritt g) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimpägnierung in Stufe c) direkt eine Polymerschmelze zur Verfügung und ein Aufschmelzen von Polymeren ist nicht notwendig. Dies ist nicht nur wirtschaftlicher, sondern führt auch zu expandierbaren Polymeren mit niedrigen Monomergehalten, da die mechanischen Schereinwirkung im Aufschmelzbereich eines Extruders, die in der Regel zu einer Rückspaltung von Monomeren führt, vermieden wird. Um den Monomerengehalt niedrig zu halten, insbesondere unter 500 ppm, ist es ferner zweckmäßig, den mechanischen und thermischen Energieeintrag in allen folgenden Verfahrensstufen so gering wie möglich zu halten. Besonders bevorzugt werden daher Scherraten unter 50/sec, bevorzugt 5 bis 30/sec, und Temperaturen unter 260 °C sowie kurze Verweilzeiten im Bereich von 1 bis 20, bevorzugt 2 bis 10 Minuten in den Stufen c) bis e) eingehalten. Besonders bevorzugt werden ausschließlich statische Mischer und statische Kühler im gesamten Verfahren eingesetzt. Die Polymerschmelze kann durch Druckpumpen, z. B. Zahnradpumpen, gefördert und ausgetragen werden.

Eine weitere Möglichkeit zur Verringerung des Monomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation führt nicht nur zu Polymeren mit niedrigem Monomeranteil, sondern gleichzeitig zu geringen Oligomerenanteilen.

Zur Verbesserung der Verarbeitbarkeit können die fertigen expandierbaren Polymergranulate durch Glycerinester, Antistatika oder Antiverklebungsmittel beschichten werden.

Die erfindungsgemäßen expandierbaren, thermoplastischen Polymergranulate werden in einem ersten Schritt vorzugsweise mittels Heißluft oder Wasserdampf zu Schaumpartikeln mit einer Dichte im Bereich von 10 bis 250 g/l vorgeschäumt und in einem zweiten Schritt in einer geschlossenen Form zu Partikelschaumformteilen verschweißt.

Aufgrund der gegenüber Partikelschaumstoffen aus EPS höheren Initialsteifigkeit eignen sich die erfindungsgemäßen Partikelschaumstoffe insbesondere zur Herstellung von Paletten. Zur Verbesserung der Haltbarkeit der Paletten können diese gegebenenfalls mit Holz, Kunststoff oder Metall verklebt oder mit einer Kunststofffolie, beispielsweise aus Polyolefinen oder Styrol-Butadien-Blockcopolymeren allseitig ummantelt werden.

Die Erfindung wird durch die Beispiele näher erläutert, ohne sie dadurch beschränken zu wollen.

### Beispiele:

### Einsatzstoffe:

- Luran VLP:: SAN mit einem Acrylnitrilgehalt von 35 % und MW 145 800 (Handelsprodukt der BASF SE)
- Luran VLS:: AMSAN mit einem Acrylnitrilgehalt von 31 % und MW 101 000 (Handelsprodukt der BASF SE)
- Luwax AH3:: Nukleierungsmittel, Polyethylenwachs mit Schmelzpunkt 110 - 118°C und MW 3500 (Handelsprodukt der BASF SE)

### Vergleichsbeispiele 1 - 3 (Tabelle 1)

In einem Zweischneckenextruder der Firma Leitritz ZSK 18 wurden 100 Gew.-% Luran VLP bei 230 - 250 °C aufgeschmolzen. Anschließend wurde die Polymerschmelze mit 4,0 % oder 5,0 % oder 5,5 Gew.-% s-Pentan, bezogen auf die Polymermatrix, beladen. Danach wurde die Polymerschmelze in zwei statischen Mischern homogenisiert und auf 190 °C abgekühlt. Zu dem treibmittelbeladenen Hauptschmelzestrom wurden über einen Seitenextruder 0,2 Gew.-% Luwax AH3, bezogen auf die Polymermatrix, als Nukleierungsmittel zugegeben. Nach Homogenisierung über zwei weitere statische Mischer wurde die Schmelze auf 140 °C - 150 °C gekühlt und durch eine beheizte Lochplatte extrudiert (4 Löcher mit 0,65 mm Bohrung und 280 °C Lochplattentemperatur). Der Polymerstrang wurde mittels Unterwassergranulierung abgeschlagen (12 bar Unterwasserdruck, 60 °C Wassertemperatur), so dass ein treibmittelbeladenes Minigranulat mit enger Teilchengrößenverteilung (d' = 1,2 mm) erhalten wurde.

### Beispiel 5

In einem Zweischneckenextruder der Firma Leitritz ZSK 18 wurden 50 Gew.-% Luran VLP mit 50 Gew.-% Luran VLS bei 230 - 250 °C aufgeschmolzen. Anschließend wurde die Polymerschmelze mit 5,0 Gew.-% s-Pentan und zusätzlich 1,0 Gew.-% Ethanol, bezogen auf die Polymermatrix, beladen. Danach wurde die Polymerschmelze in zwei statischen Mischern homogenisiert und auf 190 °C abgekühlt. Zu dem treibmittelbeladenen Hauptschmelzestrom wurden über einen Seitenextruder 0,2 Gew.-% Luwax AH3 (BASF-Produkt), bezogen auf die Polymermatrix, als Nukleierungsmittel zugegeben. Nach Homogenisierung über zwei weitere statische Mischer wurde die Schmelze auf 140 °C - 150 °C gekühlt und durch eine beheizte Lochplatte extrudiert (4 Löcher mit 0,65 mm Bohrung und 280 °C Lochplattentemperatur). Der Polymerstrang wurde mittels Unterwassergranulierung abgeschlagen (12 bar Unterwasserdruck, 60 °C Wassertemperatur), so dass ein treibmittelbeladenes Minigranulat mit enger Teilchengrößenverteilung (d' = 1,2 mm) erhalten wurde.

Das treibmittelhaltige Granulat wurde in einem EPS-Vorschäumer zu Schaumperlen mit einer Dichte von 55 g/l vorgeschäumt und in einem EPS-Formteilautomaten bei einem Überdruck von 0,5 bar zu Paletten verarbeitet.

**Tabelle 1 (Vergleichsbeispiele)**

| Vergleichsbeispiel | Vgl.Bsp. 1 | Vgl.Bsp. 2 Vgl.Bsp. 3 | |
|---|---|---|---|
| Pentan (%) | 4,0 | 5,0 5,5 | |
| Schüttdichte (g/l) | 95,6 | 106,6 23 | |
| Zellzahl (1/mm) | 7,5 | 7,9 12,9 | |
| Druckspannung (kPa) | | | |
| 10 % Stauchung | 851 | 1075 113 | |
| 25 % Stauchung (EN ISO 3386-1) | 1092 | 1382 141 | |

Durch den Zusatz des co-Treibmittels Ethanol in Beispiel 5 konnte die Verarbeitbarkeit (niedrige Schüttdichten < 20 g/l) und die Verschweißung der Schaumstoffpartikel im späteren Formteil deutlich verbessert werden.

## Patentansprüche

1. Expandierbares, thermoplastisches Polymergranulat enthaltend
5 bis 100 Gew.-% einer Komponente (A) enthaltend
a1) 5 bis 100 Gew.-% (bezogen auf (A)) eines α-Methylstyrol/Acrylnitril-Copolymers und/oder α-Mothylstyrol/Styrol/Acrylnitril-Terpolymers und
a2) 0 bis 95 Gew.-% (bezogen auf A) eines Styrol/Acrylnitril-Copolymers;
0 bis 95 Gew.-% Polystyrol (B) und
0 bis 95 Gew.-% eines von (A) und (B) verschiedenen thermoplastischen Polymers (C),
erhältlich durch ein Verfahren umfassend die Schritte
a) Polymerisation von α-Methylstyrolmonomeren, Styrol und/oder Acrylnitril zu α-Methylstyrol-Copolymeren (A) sowie gegebenenfalls Polymerisation von Styrol zu Polystyrol (B), unter Erzeugung einer Polymerschmelze,
b) Entgasung der erhaltenen Polymerschmelze,
c) gegebenenfalls Mischen mit den übrigen Polymeren der Komponenten (A), (B) und (C),
d) Einmischen eines Treibmittels in einem Anteil von insgesamt 2 bis 10 Gew.-%, bezogen auf die treibmittelhaltige Polymerschmelze, aus aliphatischen Kohlenwasserstoffen mit 2 bis 7 Kohlenstoffatomen oder halogenierten Kohlenwasserstoffen und Ethanol, Aceton oder Methylformiat als Co-Treibmittel und gegebenenfalls Additiven in die Polymerschmelze mittels statischen oder dynamischen Mischer bei einer Temperatur von mindestens 150°C,
e) Kühlen der treibmittelhaltigen Polymerschmelze auf eine Temperatur, die mindestens 120°C beträgt,
f) Austrag durch eine Düsenplatte mit Bohrungen, deren Durchmesser am Düsenaustritt höchstens 1,5 mm beträgt und
g) Granulieren der treibmittelhaltigen Schmelze.

2. Expandierbares, thermoplastisches Polymergranulat nach Anspruch 1, wobei als Treibmittel iso-Butan, n-Butan, iso-Pentan oder n-Pentan mit Ethanol, Aceton oder Methylformiat als Co-Treibmittel eingesetzt wird.

3. Expandierbares, thermoplastisches Polymergranulat nach Anspruch 1 oder 2, wobei das thermoplastische Polymergranulat
50 bis 100 Gew.-% Komponente (A) und
0 bis 50 Gew.-% thermoplastisches Polymer (C)
enthält.

4. Expandierbares, thermoplastisches Polymergranulat nach einem der Ansprüche 1 bis 3, enthaltend als Komponente (A) eine Mischung, enthaltend
10 bis 100 Ges.-% (jeweils bezogen auf (A)) der AMSAN-Polymerkomponente (a1), und
0 bis 90 Ges.-% (jeweils bezogen auf (A)) der Komponente (a2).

5. Expandierbares, thermoplastisches Polymergranulat nach Anspruch 4, enthaltend als Komponente (A) eine Mischung, enthaltend
20 bis 100 Gew.-% (jeweils bezogen auf (A)) der AMSAN-Polymerkomponente (a1) und
0 bis 80 Gew.-% (jeweils bezogen auf (A)) der Komponente (a2).

6. Expandierbares, thermoplastisches Polymergranulat nach einem der Ansprüche 1 bis 5, enthaltend als AMSAN-Polymerkomponente (a1) ein α-Methylstyrol/Acrynitril-Copolymer (a11).

7. Expandierbares, thermoplastisches Polymergranulat nach Anspruch 6, wobei das Copolymer (a11) erhältlich ist aus
(a111) 10 bis 50 Gew.-% (bezogen auf (a11)) Acrylnitril und
(a112) 50 bis 90 Gew.-% (bezogen auf (a11)) α-Methylstyrol.

8. Expandierbares, thermoplastisches Polymergranulat nach einem der Ansprüche 1 bis 5, enthaltend als AMSAN-Polymerkomponente (a1) ein α-Methylstyrol/Styrol/Acrylnitril-Terpolymer (a12).

9. Expandierbares, thermoplastisches Polymergranulat nach Anspruch 8, wobei das Terpolymer (a12) erhältlich ist aus
(a121) 61 bis 85 Gew.-% (bezogen auf (a12)) α-Methylstyrol,
(a122) 1 bis 15 Gew.-% (bezogen auf (a12)) Styrol und
(a123) 14 bis 34 Gew.-% (bezogen auf (a12)) Acrylnitril.

10. Expandierbares, thermoplastisches Polymergranulat nach einem der Ansprüche 1 bis 9, wobei als Komponente (C) ein thermoplastisches Polyamid zugesetzt wird.

11. Verfahren zur Herstellung eines expandierbaren thermoplastischen Polymergranulats gemäß Anspruch 1, umfassend die Schritte
a) Polymerisation von α-Methylstyrolmonomeren, Styrol und/oder Acrylnitril zu α-Methylstyrol-Copolymeren (A) sowie gegebenenfalls Polymerisation von Styrol zu Polystyrol (B), unter Erzeugung einer Polymerschmelze,
b) Entgasung der erhaltenen Polymerschmelze,
c) gegebenenfalls Mischen mit den übrigen Polymeren der Komponenten (A), (B) und (C),
d) Einmischen eines Treibmittels in einem Anteil von insgesamt 2 bis 10 Gew.-%, bezogen auf die treibmittelhaltige Polymerschmelze, aus aliphatischen Kohlenwasserstoffen mit 2 bis 7 Kohlenstoffatomen oder halogenierten Kohlenwasserstoffen und Ethanol, Aceton oder Methylformiat als Co-Treibmittel und gegebenenfalls Additiven, in die Polymerschmelze mittels statischen oder dynamischen Mischer bei einer Temperatur von mindestens 150°C,
e) Kühlen der treibmittelhaltigen Polymerschmelze auf eine Temperatur, die mindestens 120°C beträgt,
f) Austrag durch eine Düsenplatte mit Bohrungen, deren Durchmesser am Düsenaustritt höchstens 1,5 mm beträgt und
g) Granulieren der treibmittelhaltigen Schmelze.

## Claims

1. Expandable thermoplastic polymer granules comprising
from 5 to 100% by weight of a component (A) comprising
a1) from 5 to 100% by weight (based on (A)) of an α-methylstyrene/acrylonitrile copolymer and/or α-methylstyrene/styrene/acrylonitrile terpolymer and
a2) from 0 to 95% by weight (based on (A)) of a styrene/acrylonitrile copolymer;
from 0 to 95% by weight of polystyrene (B) and
from 0 to 95% by weight of a thermoplastic polymer (C) other than (A) and (B),
obtainable by a process comprising the steps of
a) polymerizing α-methylstyrene monomers, styrene and/or acrylonitrile to give α-methylstyrene copolymers (A) and optionally polymerizing styrene to give polystyrene (B), producing a polymer melt,
b) devolatilizing the resulting polymer melt,
c) optionally mixing with the remaining polymers of components (A), (B) and (C),
d) mixing a blowing agent in a total proportion of from 2 to 10% by weight, based on the blowing agent-containing polymer melt, composed of aliphatic hydrocarbons having from 2 to 7 carbon atoms or halogenated hydrocarbons and ethanol, acetone or methyl formate as co-blowing agents, and optionally additives, into the polymer melt by means of static or dynamic mixers at a temperature of at least 150°C,
e) cooling the blowing agent-containing polymer melt to a temperature which is at least 120°C,
f) discharging through a die plate with bores whose diameter at the die outlet is at most 1.5 mm and
g) granulating the blowing agent-containing melt.

2. Expandable thermoplastic polymer granules according to claim 1, wherein the blowing agent used is isobutane, n-butane, isopentane or n-pentane with ethanol, acetone or methyl formate as co-blowing agents.

3. Expandable thermoplastic polymer granules according to claim 1 or 2, wherein the thermoplastic polymer granules comprise
from 50 to 100% by weight of component (A) and
from 0 to 50% by weight of thermoplastic polymer (C).

4. Expandable thermoplastic polymer granules according to any of claims 1 to 3, comprising, as component (A), a mixture comprising
from 10 to 100% by weight (based in each case on (A)) of the AMSAN polymer component (a1), and
from 0 to 90% by weight (based in each case on (A)) of component (a2).

5. Expandable thermoplastic polymer granules according to claim 4, comprising, as component (A), a mixture comprising
from 20 to 100% by weight (based in each case on (A)) of the AMSAN polymer component (a1), and
from 0 to 80% by weight (based in each case on (A)) of component (a2).

6. Expandable thermoplastic polymer granules according to any of claims 1 to 5, comprising, as AMSAN polymer component (a1), an α-methylstyrene/acrylonitrile copolymer (a11).

7. Expandable thermoplastic polymer granules according to claim 6, wherein the copolymer (a11) is obtainable from
(a111) from 10 to 50% by weight (based on (a11)) of acrylonitrile and
(a112) from 50 to 90% by weight (based on (a11)) of α-methylstyrene.

8. Expandable thermoplastic polymer granules according to any of claims 1 to 5, comprising, as AMSAN polymer component (a1) , an α-methylstyrene/styrene/acrylonitrile terpolymer (a12).

9. Expandable thermoplastic polymer granules according to claim 8, wherein the terpolymer (a12) is obtainable from
(a121) from 61 to 85% by weight (based on (a12)) of α-methylstyrene,
(a122) from 1 to 15% by weight (based on (a12)) of styrene and
(a123) from 14 to 34% by weight (based on (a12)) of acrylonitrile.

10. Expandable thermoplastic polymer granules according to any of claims 1 to 9, wherein a thermoplastic polyamide is added as component (C).

11. A process for producing expandable thermoplastic polymer granules according to claim 1, comprising the steps of
a) polymerizing α-methylstyrene monomers, styrene and/or acrylonitrile to give α-methylstyrene copolymers (A) and optionally polymerizing styrene to give polystyrene (B), producing a polymer melt,
b) devolatilizing the resulting polymer melt,
c) optionally mixing with the remaining polymers of components (A), (B) and (C),
d) mixing a blowing agent in a total proportion of from 2 to 10% by weight, based on the blowing agent-containing polymer melt, composed of aliphatic hydrocarbons having from 2 to 7 carbon atoms or halogenated hydrocarbons and ethanol, acetone or methyl formate as co-blowing agents, and optionally additives, into the polymer melt by means of static or dynamic mixers at a temperature of at least 150°C,
e) cooling the blowing agent-containing polymer melt to a temperature which is at least 120°C,
f) discharging through a die plate with bores whose diameter at the die outlet is at most 1.5 mm and
g) granulating the blowing agent-containing melt.

## Revendications

1. Granulat de polymère thermoplastique, expansible, contenant
5 à 100% en poids de composant (A), contenant
a1) 5 à 100% en poids (par rapport à (A)) d'un copolymère d'α-méthylstyrène/acrylonitrile et/ou d'un terpolymère d'α-méthylstyrène/styrène/acrylonitrile et
a2) 0 à 95% en poids (par rapport à A) d'un copolymère de styrène/acrylonitrile ;
0 à 95% en poids de polystyrène (B) et
0 à 95% en poids d'un polymère thermoplastique (C) différent de (A) et de (B) et
pouvant être obtenu par un procédé comprenant les étapes
a) polymérisation de monomères d'α-méthylstyrène, de styrène et/ou d'acrylonitrile en copolymères d'α-méthylstyrène (A) ainsi que le cas échéant polymérisation de styrène en polystyrène (B), en générant une masse fondue de polymère,
b) dégazage de la masse fondue de polymère obtenue,
c) le cas échéant mélange avec les autres polymères des composants (A), (B) et (C),
d) introduction dans le mélange d'un agent gonflant en une proportion totale de 2 à 10% en poids, par rapport à la masse fondue de polymère contenant l'agent gonflant, constitué par des hydrocarbures aliphatiques comprenant 2 à 7 atomes de carbone ou des hydrocarbures halogénés et de l'éthanol, de l'acétone ou du formiate de méthyle comme co-agent gonflant et le cas échéant des additifs dans la masse fondue de polymère au moyen de mélangeurs statiques ou dynamiques à une température d'au moins 150°C,
e) refroidissement de la masse fondue de polymère contenant l'agent gonflant à une température d'au moins 120°C,
f) évacuation via une plaque de filière comportant des trous dont le diamètre à la sortie de la filière est d'au plus 1,5 mm et
g) granulation de la masse fondue contenant l'agent gonflant.

2. Granulat de polymère thermoplastique, expansible selon la revendication 1, en utilisant comme agent gonflant de l'isobutane, du n-butane, de l'isopentane ou du n-pentane avec de l'éthanol, de l'acétone ou du formiate de méthyle comme co-agent gonflant.

3. Granulat de polymère thermoplastique, expansible selon la revendication 1 ou 2, le granulat de polymère thermoplastique contenant
50 à 100% en poids de composant (A) et
0 à 50% en poids de polymère thermoplastique (C).

4. Granulat de polymère thermoplastique, expansible selon l'une quelconque des revendications 1 à 3, contenant comme composant (A) un mélange, contenant
10 à 100% en poids (à chaque fois par rapport à (A)) du composant polymère AMSAN (a1), et
0 à 90% en poids (à chaque fois par rapport à (A)) du composant (a2).

5. Granulat de polymère thermoplastique, expansible selon la revendication 4, contenant comme composant (A) un mélange, contenant
20 à 100% en poids (à chaque fois par rapport à (A)) du composant polymère AMSAN (a1), et
0 à 80% en poids (à chaque fois par rapport à (A)) du composant (a2).

6. Granulat de polymère thermoplastique, expansible selon l'une quelconque des revendications 1 à 5, contenant comme composant polymère AMSAN (a1) un copolymère d'α-méthylstyrène/acrylonitrile (a11).

7. Granulat de polymère thermoplastique, expansible selon la revendication 6, le copolymère (a11) pouvant être obtenu à partir de
(a111) 10 à 50% en poids (par rapport à (a11)) d'acrylonitrile et
(a112) 50 à 90% en poids (par rapport à (a11)) d'α-méthylstyrène.

8. Granulat de polymère thermoplastique, expansible selon l'une quelconque des revendications 1 à 5, contenant comme composant polymère AMSAN (a1) un terpolymère d'α-méthylstyrène/styrène/acrylonitrile (a12).

9. Granulat de polymère thermoplastique, expansible selon la revendication 8, le terpolymère (a12) pouvant être obtenu à partir de
(a121) 61 à 85% en poids (par rapport à (a12)) d'α-méthylstyrène,
(a122) 1 à 15% en poids (par rapport à (a12)) de styrène et
(a123) 14 à 34% en poids (par rapport à (a12)) d'acrylonitrile.

10. Granulat de polymère thermoplastique, expansible selon l'une quelconque des revendications 1 à 9, un polyamide thermoplastique étant ajouté comme composant (C).

11. Procédé pour la préparation d'un granulat de polymère thermoplastique, expansible selon la revendication 1, comprenant les étapes
a) polymérisation de monomères d'α-méthylstyrène, de styrène et/ou d'acrylonitrile en copolymères d'α-méthylstyrène (A) ainsi que le cas échéant polymérisation de styrène en polystyrène (B), en générant une masse fondue de polymère,
b) dégazage de la masse fondue de polymère obtenue,
c) le cas échéant mélange avec les autres polymères des composants (A), (B) et (C),
d) introduction dans le mélange d'un agent gonflant en une proportion totale de 2 à 10% en poids, par rapport à la masse fondue de polymère contenant l'agent gonflant, constitué par des hydrocarbures aliphatiques comprenant 2 à 7 atomes de carbone ou des hydrocarbures halogénés et de l'éthanol, de l'acétone ou du formiate de méthyle comme co-agent gonflant et le cas échéant des additifs dans la masse fondue de polymère au moyen de mélangeurs statiques ou dynamiques à une température d'au moins 150°C,
e) refroidissement de la masse fondue de polymère contenant l'agent gonflant à une température d'au moins 120°C,
f) évacuation via une plaque de filière comportant des trous dont le diamètre à la sortie de la filière est d'au plus 1,5 mm et
g) granulation de la masse fondue contenant l'agent gonflant.
